# EUROPÄISCHE PATENTSCHRIFT

(11) **EP 0 267 528 B1**
(45) Veröffentlichungstag und Bekanntmachung des Hinweises auf die Patenterteilung: **11.08.1993**
(21) Anmeldenummer: 87116189.9
(22) Anmeldetag: 04.11.1987
(51) Int. Cl.: H04B 17/02

(54) **Digitales Nachrichtenübertragungssystem mit Adressen aufweisenden Zwischenregeneratoren und Einrichtungen zur Fehlerortung**
Digital data transmission system with adressable repeaters having fault localization devices
Système numérique de transmission de données comprenant des répéteurs adressables et des dispositifs de localisation d'erreurs

(30) Priorität: 08.11.1986 DE 3638147
(43) Veröffentlichungstag der Anmeldung: 18.05.1988
(73) Patentinhaber: Alcatel SEL Aktiengesellschaft, D-70435 Stuttgart (DE)
(72) Erfinder: Adler, Klemens, D-7147 Eberdingen (DE)
(74) Vertreter: Kugler, Hermann, Dipl.-Phys.

(56) Entgegenhaltungen:
- EP-A- 0 143 489

## Beschreibung

Die Erfindung betrifft ein digitales Nachrichtenübertragungssystem mit zwei Endstellen und einer Vielzahl von Zwischenregeneratoren, von denen jeder eine eigene Adresse hat und durch in Verbindung mit dieser Adresse empfangene Befehle fernsteuerbar ist.

Ein derartiges System ist bekannt aus DE-A1-29 42 410 oder aus DE-C1-35 22 446.

Bei digitalen Nachrichtenübertragungssystemen mit einer Vielzahl von Zwischenregeneratoren sind Einrichtungen gefordert, um nach Feststellung einer Störung der Nachrichtenübertragung von einer Endstelle des Systems aus den Ort des Fehlers auf der Übertragungsstrecke feststellen zu können. Bezüglich dieser Fehlerortung unterscheidet man zwischen Systemen, bei denen jeder Zwischenregenerator eine eigene Adresse hat und dadurch gezielt angesteuert werden kann und Systemen mit einer adressenfreien Fehlerortung.

Aus EP-A-0 143 489 ist ein doppelt gerichtetes digitales Nachrichtenübertragungssystem mit zwei Endstellen und einer Vielzahl von Zwischenregeneratoren bekannt. Dort haben die Zwischenregeneratoren keine Adressen, insbesondere keine eigenen Adressen, sondern sie sind alle einander gleich gebaut. In jedem ist eine feste Zahl A und eine feste Zahl B gespeichert. Ansteuerbar ist ein Zwischenregenerator dadurch, daß die Endstelle eine seine Position enthaltende Adressenzahl sendet und jeder eine solche Adressenzahl empfangende Zwischenregenerator die Zahl mit der festen Zahl B vergleicht, im Falle der Übereinstimmung sich als adressiert betrachtet und im Falle der Nichtübereinstimmung die Zahl verändert, indem er sie um die Zahl A vergrößert, bevor er sie an den nächsten Zwischenregenerator weitersendet. Diese Art von Adressierung von Zwischenregeneratoren ohne individuelle Zwischenregenerator-Adressen erfordert einen erheblichen Aufwand.

Bei Systemen mit den Zwischenregeneratoren eigenen Adressen liegt gemäß der DE-A1-29 42 410 ein Problem darin, daß die Adresse eines Zwischengenerators individuell eingestellt werden muß, so daß wegen dieses Problems die Systeme mit adressenfreier Fehlerortung häufig bevorzugt werden. Aus der DE-C1 35 22 446 ist für ein System mit den Zwischenregeneratoren eigenen Adressen ein Zwischengenerator bekannt, der einen Adressenspeicher für eine digtale Adresse aufweist. Es ist dort gesagt, daß diese Adresse die dem Zwischenregenerator zugeordnete Adresse ist, jedoch ist nichts darüber ausgesagt, nach welchem Kriterium oder auf welche Weise die Zuordnung der Adresse zum Zwischengenerator erfolgt ist, auf welche Weise die den Zwischengeneratoren zugeordneten Adressen in das Ortungsgerät eingegeben werden und auf welche Weise das Ortungsgerät Kenntnis davon erhält, an welchem Standort innerhalb des Systems sich der Zwischenregenerator mit einer bestimmten Adresse befindet.

Es ist die Aufgabe der Erfindung, ein digitales Nachrichtenübertragungssystem mit Adressen aufweisenden Zwischenregeneratoren anzugeben, das sich durch eine neue und vorteilhafte Adressenzuordnung von bekannten Systemen unterscheidet.

Die Aufgabe ist wie im Anspruch 1 angegeben gelöst. Weiterbildungen ergeben sich aus den Unteransprüchen 2 bis 5.

Ein Aspekt der Erfindung ist, daß eine Serie von Zwischenregeneratoren hinsichtlich der Zwischenregeneratoren-Adressen anders als beim Stand der Technik gestaltet ist. Dies ist Gegenstand des Anspruchs 6.

Ein weiterer Aspekt der Erfindung ist, daß ein neues Ortungsgerät für ein erfindungsgemäßes System geschaffen wurde, das in der Lage ist, sich Kenntnis darüber zu verschaffen, welcher Zwischenregenerator sich an welchem Standort innerhalb des Systems befindet.

Das neue Ortungsgerät ist Gegenstand des Anspruchs 7, und eine Weiterbildung ist Gegenstand des Anspruchs 8.

Die erfindungsgemäßen Zwischengeneratoren und das mit ihnen ausgerüstete System haben den Vorteil, daß bei einer Installation eines Zwischengenerators in das System keine Adresseneinstellung erforderlich ist, auch nicht beim nachträglichen Einbau eines zusätzlichen Zwischenregeneratoren oder beim Ersatz eines vorhandenen Zwischenregenerators durch einen neuen. Der Zwischenregenerator erhält bei seiner Herstellung seine Adresse, die ihm, wo immer er verwendet wird, wie eine Fabriknummer anhaftet.

Die Erfindung wird nun anhand der Zeichnungen beispielsweise näher erläutert.
Es zeigen:
- Fig. 1: ein Blockschaltbild eines erfindungsgemäßen Zwischenregenerator und
- Fig. 2: ein Blockschaltbild eines erfindungsgemäßen Ortungsgeräts.

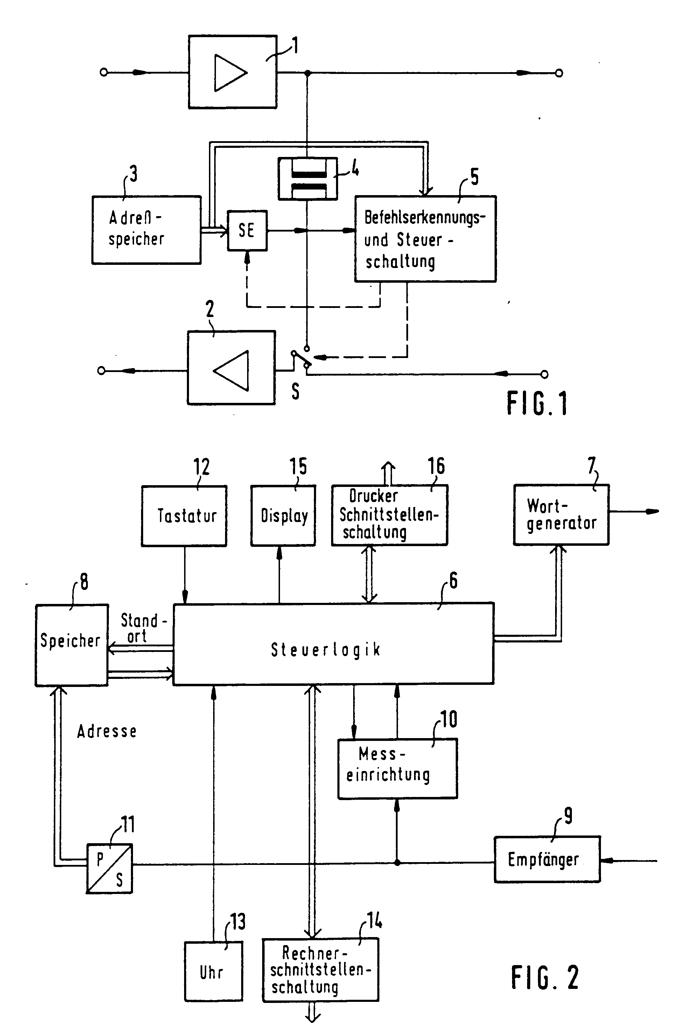

Der Zwischenregenerator nach Fig. 1 besteht aus zwei gleichartig aufgebauten Regeneratoren 1 und 2 für zwei Übertragungsrichtungen und einer gemeinsamen Einrichtung zur Fehlerortung. Diese hat als wesentliches Merkmal der Erfindung einen Adreßspeicher 3 für die dem Zwischenregenerator zugeordnete Adresse. In diesem Adreßspeicher ist die Adresse unveränderbar eingespeichert und gehört daher untrennbar zu diesem Gerät ebenso wie eine Fabrikationsnummer unveränderbar und untrennbar zu einem Gerät gehört. Die Adresse ist beispielsweise eine für dieses Gerät spezifische Zahl in dualer Darstellung, die so gewählt ist, daß niemals zwei verschiedene Zwischenregeneratoren dieselbe Zahl als Adresse in ihrem Adreßspeicher 3 gespeichert haben. Der Adreßspeicher 3 ist ein digitaler Festwertspeicher, dessen Programmierung unveränderbar ist.

Wie bei dem bekannten Zwischenregenerator ist auch bei dem neuen Zwischenregenerator nach Fig. 1 eine Schleifenbildung dadurch möglich, daß der Ausgang des Regenerators 1 für die eine Übertragungsrichtung mit dem Eingang des Regenerators 2 für die andere Übertragungsrichtung über einen steuerbaren Schalter S verbunden wird. In diese Verbindung ist eine galvanische Trennung 4 eingefügt, die durch einen Transformator angedeutet ist.

Für die gezeigte Umschalteinrichtung zur Schleifenbildung, die den Ausgang des Regenerators 1 mit dem Eingang des Regenerators 2 verbindet, ist Vorausgesetzt, daß die Endstelle des Systems, von der aus die Schleifenbildung oder irgendeine andere Maßnahme in dem Zwischenregenerator ausgelöst wird, diejenige Endstelle ist, die in Richtung des Regenerators 1 sendet, also sich in der Darstellung nach Figur 1 "auf der linken Seite" des Systems befindet.

Eine Befehlserkennungs- und Steuerschaltung 5 ist über die zur galvanischen Trennung vorgesehene Schaltung 4 mit dem Ausgang des Regenerators 1 verbunden und außerdem mit dem Ausgang des Adreßspeichers 3. Die Befehlserkennungs- und Steuerschaltung 5 ist in der Lage,durch Vergleich der von der ortenden oder fernsteuernden Endstelle ausgesendeten und von allen Zwischenregeneratoren empfangenen Adresse mit der im Adreßspeicher 3 gespeicherten individuellen Adresse zu vergleichen und außerdem die von der Endstelle aus gesendeten Befehle zu erkennen und die Ausführung der Befehle zu veranlassen. Unter Befehlen sind solche zu verstehen, die in Verbindung mit der Adresse eines speziellen Zwischenregenerators ausgesendet werden und daher nur an diesen speziellen Zwischenregenerator gerichtet sind und solche Befehle, die ohne Zusammenhang mit irgendeiner Adresse ausgesendet werden und an alle Zwischenregeneratoren des Systems gerichtet sind. Bei dem in Fig. 1 gezeigten Zwischenregenerator, der für eine doppelt gerichtete Nachrichtenübertragung vorgesehen ist und eine Umschalteinrichtung zur Schleifenbildung enthält, steuert die Befehlserkennungs- und Steuerschaltung 5 bei Empfang eines entsprechenden Befehls den Schalter S so, daß er die nicht gezeigte Schalterstellung einnimmt und damit die Schleife schließt und sie steuert wiederum bei einem entsprechenden Befehl einen Sender SE, der eingangsseitig mit dem Adreßspeicher 3 und ausgangsseitig über den Schalter S mit dem Eingang des Regenerators 2 verbindbar ist, so, daß er die Adresse des Zwischenregenerators aussendet. Beispiele hierfür zur Zusammenarbeit mit einem zu erläuternden erfindungsgemäßen Ortungsgerät des Systems werden noch angegeben.

Anhand von Fig. 2 wird nun das Blockschaltbild eines neuen Ortungsgeräts erläutert, das für ein doppelt gerichtetes Nachrichtenübertragungssystem mit den erfindungsgemäßen Zwischenregeneratoren nach Fig. 2 vorgesehen ist und das in Verbindung mit den neuen Zwischenregeneratoren Vorteile für ein solches Nachrichtenübertragungssystem hinsichtlich der Adressierbarkeit der Zwischenregeneratoren und der Durchführung der Fehlerortung bietet.

Die zentrale Einrichtung des Ortungsgeräts ist eine Steuerlogik 6, die Informationen von verschiedenen angeschlossenen Einrichtungen empfängt und Steuerinformationen zur Ansteuerung verschiedener anderer Einrichtungen abgibt. Zur Fernsteuerung verschiedener Funktionen in den Zwischenregeneratoren des Systems sind vier verschiedene vom Ortungsgerät auf die Strecke auszusendende Wörter vorgesehen, die entweder nur aus einem Befehl, der an alle Zwischenregeneratoren gerichtet ist, oder aus einem an einzelne Zwischenregeneratoren mit deren Adresse verbundenem Befehl stehen. Diese Wörter W1 bis W4 haben die folgende Bedeutung:
- W1:: Befehl (an alle) ohne Adresse:
Adresse aussenden
- W2:: Befehl (an nur einen einzelnen) mit Adresse:
Schleife schließen
- W3:: Befehl (an nur einen einzelnen) mit Adressen:
Wartezustand einnehmen,
- W4:: Befehl (an alle) ohne Adresse:
Betriebszustand einnehmen.

Zum Erzeugen und Aussenden dieser Befehle dient ein von der Steuerlogik 6 gesteuerter Wortgenerator 7.

Das Ortungsgerät nach Fig. 2 arbeitet wie nachstehend beschrieben wird mit dem Zwischenregenerator nach Fig. 1 zusammen. Wenn das Ortungsgerät zur Fehlerortung an die Endstelle angeschlossen wird, hat es zunächst keine Information darüber, welche Adressen die Zwischenregeneratoren des Systems haben und welcher mit einer Adresse versehene Zwischenregenerator an welchem Standort innerhalb der Nachrichtenübertragungsstrecke sich befindet. Das Ortungsgerät hat daher zunächst keine Möglichkeit, die Zwischenregeneratoren gezielt anzusteuern.

Um die dazu notwendigen Informationen zu erhalten, sind im Ortungsgerät die anhand von Fig. 2 zu beschreibenden erfindungsgemäßen Einrichtungen vorhanden, die dem Ortungsgerät ermöglichen, die Zwischenregeneratoren nacheinander entsprechend ihrer örtlichen Reihenfolge im System nach ihren Adressen abzufragen und diese in einem Speicher zusammen mit dem Standort der Zwischenregeneratoren zu speichern. Dies kann in einer sogenannten Initialisierungsphase entweder nur einmal nach Inbetriebnahme des Ortungsgeräts oder von Zeit zu Zeit, ausgelöst durch Handbetätigung oder durch eine Uhr oder durch Fernsteuerung von einem Rechner, durchgeführt werden.

Die Steuerlogik 6 ist mit einem Speicher 8 verbunden, in den einerseits die Adresse eines Zwischenregenerators und andererseits seine Position innerhalb des Systems eingespeichert wird. Im Speicher werden diese beiden Informationen einander zugeordnet, so daß sich für einen Zwischenregenerator im Speicher 8 die Information befindet, daß er eine Adresse XYZ hat und von der ortenden Endstelle aus gesehen z.B. der fünfte von den hintereinander befindlichen Zwischenregeneratoren des Systems ist. Sendet irgendeiner der auf der Strecke befindlichen Zwischenregeneratoren nach einer noch zu erläuternden Abfrage seine Adresse zum Ortungsgerät, so gelangt diese auf einen Empfänger 9, dessen Ausgang mit einer Meßeinrichtung 10 und mit einem Serien-Parallel-Wandler 11 verbunden ist. Die Meßeinrichtung empfängt, wenn die Steuerlogik 6 an die Zwischenregeneratoren den Befehl gibt, ihre Adresse auszusenden, ein Triggersignal von der Steuerlogik und ist somit in der Lage, wenn der Empfänger 9 eine Adresse empfängt, die zwischen dem Aussenden des Abfragebefehls und dem Eintreffen dieser Adresse verstrichene Laufzeit zu messen. Dieses Meßergebnis gibt die Meßeinrichtung an die Steuerlogik 6, die dann aufgrund der Laufzeiten erkennt, daß es ein Zwischenregenerator mit einem bestimmten Standort war, von dem gerade die Adresse empfangen wurde. (Die Zwischenregeneratoren des Systems folgen ungefähr in regelmäßigen Abständen aufeinander). Nach dieser Auswertung der empfangenen Adresse gibt der Parallel-Serien-Wandler 11 die Adresse in den Speicher 8 ein und gleichzeitig gibt die Steuerlogik den Standort des zugehörigen Zwischenregenerators in diesen Speicher ein. Im Speicher 8 wird die Adresse zusammen mit dem zugehörigen Standort abgespeichert.

Die Abfrage der Zwischenregeneratoren nach ihren Adressen geschieht wie folgt: Veranlaßt durch eine Bedienungsperson über eine an die Steuerlogik 6 angeschlossene Tastatur 12 oder automatisch, abhängig vom Stand einer an die Steuerlogik 6 angeschlossenen Uhr 13,oder durch eine mit einem Rechner verbundene und an die Steuerlogik 6 angeschlossene Rechnerschnittstellenschaltung 14 ferngesteuert, beginnt die Steuerlogik 6 den Abfragevorgang. Hierzu veranlasst sie den Wortgenerator 7, das Wort W1 über das System auszusenden, um alle Zwischenregeneratoren zum Rücksenden ihrer Adresse zum Ortungsgerät aufzufordern. Jeder Zwischenregenerator erkennt dieses Wort in seiner Befehlserkennungs-und Steuerschaltung 5 (Fig. 1), die daraufhin in jedem Zwischenregenerator den Schalter S umschaltet und die Schleife schließt und unmittelbar danach den Sender SE veranlaßt, die im Adresse-Speicher 3 gespeicherte Adresse über den Regenerator 2 auf die Übertragungsstrecke in Richtung zum Ortungsgerät auszusenden. Da in diesem Zustand aber nur der erste Zwischenregenerator (aus der Sicht der ortenden Endstelle) mit dieser ortenden Endstelle verbunden ist und die Übertragungsstrecke von den dahinterliegenden Zwischenregeneratoren zur ortenden Endstelle im jeweils davorliegenden Zwischenregenerator wegen der dort geschlossenen Schleife unterbrochen ist, gelangt nur die vom ersten Zwischenregenerator ausgesendete Adresse zum Ortungsgerät.

Dort wird, wie beschrieben,zu der Adresse die Laufzeit gemessen, davon abhängig der Standort des die Adresse sendenden Zwischenregenerators festgestellt und die empfangene Adresse zusammen mit dem zugehörigen Standort des Zwischenregenerators in den Speicher 8 eingespeichert. Daraufhin veranlaßt die Steuerlogik 6 den Wortgenerator 7, das Wort W3 in Verbindung mit der gerade empfangenen und eingespeicherten Adresse zu den Zwischenregeneratoren auszusenden. Die Befehlserkennungs- und Steuerschaltung 5 des ersten Zwischenregenerators erkennt nun die vom Ortungsgerät gesendete eigene Adresse und das Wort W3 und nimmt daraufhin den Wartezustand ein. Dies bedeutet, daß sie den Schalter S wieder in die in Fig. 1 gezeigte Stellung bringt, damit die Schleifenbildung im ersten Zwischenregenerator auftrennt und diesen Zwischenregenerator mit dem dahinterliegenden zweiten Zwischenregenerator verbindet und diese Verbindung auch dann beibehält, wenn sie erneut das Wort W1 (Befehl zur Adressenaussendung) empfängt. Im Wartezustand ignoriert ein Zwischenregenerator also den Empfang des Wortes W1, des Wortes W2 und des Wortes W3 und bleibt unverändert in diesem Zustand Nur das Wort W4, das für alle Zwischenregeneratoren gemeinsam den Befehl gibt, den Betriebszustand einzunehmen, beendet den Wartezustand eines Zwischenregenerators.

Nachdem der erste Zwischenregenerator in den Wartezustand gebracht worden ist, sendet der Wortgenerator des Ortungsgeräts das Wort W1 über die Übertragungsstrecke zu allen Zwischenregeneratoren. Der im Wartezustand befindliche erste Zwischenregenerator ignoriert diesen Befehl und behält die in Fig. 1 gezeigte Schalterstellung bei, in der er mit dem dahinterliegenden verbunden ist. Die dahinterliegenden reagieren auf das Wort W1 wie oben beschrieben, indem sie die Schleife schliessen und ihre Adresse über ihren Regenerator 2 in Richtung zum Ortungsgerät aussenden. Jedoch ist zu diesem Zeitpunkt nur der zweite Zwischenregenerator über den ersten Zwischenregenerator mit dem Ortungsgerät verbunden, während die dahinterliegenden Zwischenregeneratoren wegen des im jeweils davorliegenden vorhandenen Schleifenschlusses vom Übertragungsweg zum Ortungsgerät abgeschnitten sind, also ihre Adresse "ins Leere" senden. Die Adresse des zweiten Zwischenregenerators wird nun im Ortungsgerät empfangen und wie für die Adresse des ersten Zwischenregenerators oben beschrieben zusammen mit dem zugehörigen Standort in den Speicher 8 eingespeichert. Daraufhin sendet der Wortgenerator 7 des Ortungsgeräts über die Übertragungsstrecke das mit der Adresse des zweiten Zwischenregenerators versehene Wort W3, das diesen zweiten Zwischenregenerator veranlaßt, den Wartezustand einzunehmen.

In dieser Weise werden nacheinander alle Zwischenregeneratoren nach ihrer Adresse abgefragt und die Adressen zusammen mit dem zugehörigen Standorten in dem Speicher 8 gespeichert, bis die Abfrage nach dem letzten Zwischenregenerator das darauffolgende Endgerät erreicht. Empfängt dieses Endgerät das Wort W1, so schließt es auch eine Schleife und sendet als Antwort ein Wort, das dem Ortungsgerät mitteilt, daß sämtliche Zwischenregeneratoren von der Abfrage erfaßt worden sind und die Abfrage zu Ende ist, wenn das Ortungsgerät keine Information darüber hat, wieviele Zwischenregeneratoren sich auf der Übertragungsstrecke zwischen den beiden Endgeräten befinden. Nach Erhalt dieses Wortes sendet das Ortungsgerät über seinen Wortgenerator 7 das Wort W4, das sämtliche Zwischenregeneratoren und das ferne Endgerät in den Betriebszustand bringt, bei dem der Schalter S in der in Fig. 1 gezeigten Schalterstellung ist und die Befehlserkennungs-und Steuerschaltung 5 im Gegensatz zum Wartezustand einen erneut eingehenden Befehl zum Schleifenschluß ausführt.

Die Befehlserkennungs- und Steuerschaltung 5 bewirkt eine sogenannte "Zwangsrücksetzung" in den Betriebszustand, unabhängig vom Empfang des Wortes W4, wenn sie innerhalb einer vorgegebenen Zeit, z.B. 10 Sekunden lang keines der Wörter W1 bis W3 empfangen hat. Durch die Zwangsrücksetzung ist sichergestellt, daß ein fehlerhaft auftretender Schleifenschluß in irgendeinem Zwischenverstärker nach kurzer Zeit wieder rückgängig gemacht wird und die Übertragung im Betriebszustand nur kurzzeitig gestört werden kann.

Als Wörter W1 bis W4 sind n-Bit-Wörter zu verstehen, in welchen mit ausreichender Redundanz und Sicherheit der eigentliche Befehl enthalten ist.

Nach Kenntnis der Adressen der vorhandenen Zwischenregeneratoren und des dazugehörigen Standortes ist das Ortungsgerät in der Lage, jederzeit Messungen durchzuführen, um die Qualität der Übertragungsstrecke vom ortenden Endgerät aus jeweils bis zu einem der Zwischenregeneratoren zu untersuchen, indem es ferngesteuert die Schleife in irgendeinem Zwischenregenerator schließt, ein Prüfmuster aussendet und das über die geschlossene Prüfschleife zurück zum Ortungsgerät gelangende Prüfmuster mit dem gesendeten vergleicht, um z.B. die Bitfehlerhäufigkeit zu messen. Zur Anzeige von Meßergebnissen enthält das Ortungsgerät ein an die Steuerlogik 6 angeschlossenes Display 15 und eine Drucker-Schnittstellenschaltung 16, die ebenfalls an die Steuerlogik 6 angeschlossen ist und das Ausdrucken von Meßprotokollen an einem Drucker erlaubt. Soll in einem speziellen irgendwo auf der Strecke liegenden Zwischenregenerator die Schleife geschlossen und eine Messung durchgeführt werden, so wird vom Wortgenerator das Wort W2 in Verbindung mit der Adresse dieses Zwischenregenerators ausgesendet, das den Schleifenschluß veranlaßt. Während des Meßvorganges wird in das ausgesendete Prüfmuster immer wieder das Wort W" eingeblendet, um zu vermeiden, daß die Zwangsrücksetzung aktiviert wird. Nach Beendigung der Messung wird das Wort W4 ausgesendet, das alle Zwischenregeneratoren wieder in den Betriebszustand bringt.

Falls die Übertragungsstrecken bis zu den nacheinanderfolgenden Zwischenregeneratoren nacheinander durchgemessen werden sollten, wird vom Ortungsgerät für die Messung der Übertragungsstrecke bis zum ersten Zwischenregenerator an diesen ersten Zwischenregenerator das Wort W2 gesendet, nach Messung das Wort W3 an diesen Zwischenregenerator und nach Messung der Übertragungsstrecke bis zu diesem zweiten Zwischenregenerator das Wort W3 zu diesem Zwischenregenerator usw. bis die Übertragungsstrecke bis zu allen Zwischenregeneratoren nacheinander durchgemessen worden ist, worauf dann schließlich das die gesamte Messung abschließende Wort W4 ausgesendet wird, das alle Zwischenregeneratoren wieder in den Betriebszustand bringt, wenn sie nicht bereits vorher durch Zwangsrücksetzung von selbst in diesen Zustand gegangen sind.

Wenn auch, wie vorstehend beschrieben, die Vorteile der Erfindung vorwiegend dann zum Tragen kommen, wenn der erfindungsgemäße Zwischenregenerator nach Figur 1 mit dem erfindungsgemäßen Ortungsgerät nach Figur 2 in einem doppelt gerichteten Nachrichtenübertragungssystem zusammenarbeitet, gehören in den Rahmen der Erfindung auch noch die folgenden Varianten:
a) Der Zwischenregenerator ist nur für eine einzige Übertragungsrichtung vorhanden, hat eine Adresse unveränderbar eingespeichert, so daß bei seinem Einbau in ein Nachrichtenübertragungssystem keine Adresseneinstellung an ihm vorgenommen werden muß. Die Adresse, gewissermaßen seine Fabrikationsnummer, und eventuell der Standort, an dem er in das System eingebaut ist, wird dann in einen Plan aufgenommen, und an zentraler Stelle einem Ortungs-oder Fernsteuergerät entsprechend dem Plan eingegeben. Auch in diesem Fall hat der Zwischenregenerator eine Befehlserkennungs- und Steuerschaltung, die irgendwelche allgemein gültigen oder mit der Adresse des Zwischenregenerators verknüpften individuelle Befehle erkennt und deren Ausführung veranlaßt, z.B. Ein- und Ausschalten oder Erhöhung der Verringerung der Verstärkung. Ein Ortungsgerät nach Figur 2 ist in diesem Falle wegen des fehlenden Rückkanals nicht einsetzbar.
b) Der Zwischenregenerator ist ein Zwischenregenerator üblicher Art, also mit einer Möglichkeit zur Schleifenbildung und mit einem Adreßspeicher, in den die Adresse sich veränderbar einspeichern läßt und mit einer Befehlserkennungs- und Steuerschaltung. Auch in diesem Falle hat es einen Vorteil, wenn das Ortungsgerät ein erfindungsgemäßes Ortungsgerät nach Figur 2 ist, da ein solches Ortungsgerät jederzeit in der Lage ist, die ihm "von Hand" eingegebene Information über die an den Zwischenregeneratoren eingestellten Adressen und die Standorte selbsttätig in der oben geschilderten Weise zu überprüfen. Der Zwischenregenerator ist dann jedoch insofern erfindungsgemäß abgeändert, als er die zur Zusammenarbeit mit dem Ortungsgerät notwendigen Einrichtungen (z.B. Sender SE zum Aussenden der Adresse) aufweist.

## Patentansprüche

1. Digitales Nachrichtenübertragungssystem mit zwei Endstellen und einer Vielzahl von Zwischenregeneratoren, von denen jeder eine eigene Adresse hat und durch in Verbindung mit dieser Adresse empfangene Befehle fernsteuerbar ist,
**dadurch gekennzeichnet,**
daß in jedem Zwischenregenerator die ihm eigene Adresse in einem Speicher (3) unveränderbar eingespeichert ist.

2. Digitales Nachrichtenübertragungssystem nach Anspruch 1, dadurch gekennzeichnet, daß die Adresse eines Zwischenregenerators eine gerätespezifische Zahl ist, die ihn wie eine Fabrikationsnummer von anderen Zwischenregeneratoren derselben Serie oder derselben Bauart unterscheidet.

3. Digitales Nachrichtenübertragungssystem nach Anspruch 1 oder 2, das doppeltgerichtet ist und bei dem jeder Zwischenregenerator eine von einem Ortungsgerät aus fernsteuerbare Umschalteinrichtung zur Schleifenbildung hat, dadurch gekennzeichnet, daß das Ortungsgerät Einrichtungen (6, 7, 8, 9, 10, 11) enthält, um die Zwischenregeneratoren (Fig. 1) nacheinander entsprechend ihrer örtlichen Reihenfolge im System nach ihren Adressen abzufragen und diese in einem Speicher (8) zusammen mit dem Standort der Zwischenregeneratoren im System zu speichern.

4. System nach Anspruch 3, dadurch gekennzeichnet, daß die Einrichtungen eine Steuerlogik (6), einen von der Steuerlogik gesteuerten Wortgenerator (7) zum Aussenden von Adressen und Befehlen im Zusammenhang mit der Abfrage, einen Empfänger (9) zum Empfangen von von den Zwischenregeneratoren gesendeten Adressen und eine Meßeinrichtung (10) zum Ermitteln des Standorts des eine Adresse sendenden Zwischengenerators umfassen, wobei die Steuerlogik dafür sorgt, daß die empfangene Adresse eines Zwischenregenerators zusammen mit dessen ermitteltem Standort in den Speicher (8) eingegeben wird und daß das Ortungsgerät Mittel (12, 13, 14) enthält, die an die Steuerlogik (6) angeschlossen sind und den Abfrage- und Speichervorgang entweder handbetätigt oder automatisch oder ferngesteuert veranlassen.

5. System nach Anspruch 3 oder 4, dadurch gekennzeichnet, daß jeder der Zwischenregeneratoren einen Sender (SE) zum Aussenden seiner Adresse und eine Befehlserkennungs- und Steuerschaltung (5) zur Zusammenarbeit mit dem Ortungsgerät hat.

6. Serie von Zwischenregeneratoren für ein digitales Nachrichtenübertragungssystem mit zwei Endstellen und einer Vielzahl von Zwischenregeneratoren, bei der jeder Zwischenregenerator eine Adresse hat und durch in Verbindung mit dieser Adresse empfangene Befehle fernsteuerbar ist, dadurch gekennzeichnet, daß die Adresse jedes Zwischenregenerators eine gerätespezifische Zahl ist, die den Zwischenregenerator wie eine Fabrikationsnummer von anderen Zwischenregeneratoren derselben Serie oder derselben Bauart unterscheidet und die in einem Speicher (3) des Zwischenregenerators unveränderbar eingespeichert ist.

7. Ortungsgerät für ein doppelt gerichtetes digitales Nachrichtenübertragungssystem mit Zwischenregeneratoren, von denen jeder eine unveränderbare Adresse und eine vom Ortungsgerät aus steuerbare Umschalteinrichtung zur Schleifenbildung hat, dadurch gekennzeichnet, daß das Ortungsgerät Einrichtungen (6, 7, 8, 9, 10, 11) enthält, um die Zwischenregeneratoren (Fig. 1) nacheinander entsprechend ihrer örtlichen Reihenfolge im System nach ihren Adressen abzufragen und diese in einem Speicher (8) zusammen mit dem Standort der Zwischenregeneratoren im System zu speichern.

8. Ortungsgerät nach Anspruch 7, dadurch gekennzeichnet, daß die Einrichtungen eine Steuerlogik (6), einen von der Steuerlogik gesteuerten Wortgenerator (7) zum Aussenden von Adressen und Befehlen im Zusammenhang mit der Abfrage, einen Empfänger (9) zum Empfangen von von den Zwischenregenratoren gesendeten Adressen und eine Meßeinrichtung (10) zum Ermitteln des Standorts des eine Adresse sendenden Zwischenregenerators umfassen, wobei die Steuerlogik dafür sorgt, daß die empfangene Adresse eines Zwischenregenerators zusammen mit dessen ermitteltem Standort in den Speicher (8) eingegeben wird und daß das Ortungsgerät Mittel (12, 13, 14) enthält, die an die Steuerlogik (6) angeschlossen sind und den Abfrage- und Speichervorgang entweder handbetätigt oder automatisch oder ferngesteuert veranlassen.

## Claims

1. A digital communication system comprising two terminals and a plurality of repeaters each of which has an address of its own and is remotely controllable by instructions received in conjunction with said address,
**characterized in**
that in each repeater, the address of this repeater is unalterably stored in a memory (3).

2. A digital communication system as claimed in claim 1, characterized in that the address of a repeater is an equipment-specific number which distinguishes the repeater from other repeaters of the same series or of the same design like a serial number.

3. A digital two-way communication system as claimed in claim 1 or 2 wherein each of the repeaters has a changeover device for loop closure which is remotely controllable from a locating unit, characterized in that the locating unit includes devices (6, 7, 8, 9, 10, 11) for successively interrogating the repeaters (Fig. 1) for their addresses in accordance with their physical order in the system and for storing said addresses, together with the locations of the repeaters in the system, in a memory (8).

4. A system as claimed in claim 3, characterized in that the devices include a control logic (6), a word generator (7) controlled by the control logic and serving to transmit addresses and instructions in conjunction with the interrogation, a receiver (9) for receiving addresses transmitted by the repeaters, and a measuring device (10) for determining the location of the repeater transmitting an address, the control logic causing the received address of a repeater to be entered into the memory (8) together with the determined location of said repeater, and that the locating unit includes manually operated or automatically or remotely controlled means (12, 13, 14) connected to the control logic (6) for initiating the interrogation and storage processes.

5. A system as claimed in claim 3 or 4, characterized in that each of the repeaters includes a transmitter (SE) for transmitting the address of the repeaters and an instruction-recognition and control circuit (5) for cooperation with the locating unit.

6. A series of repeaters for a digital communication system comprising two terminals and a plurality of repeaters wherein each repeater has an address and is remotely controllable by instructions received in conjunction with said address, characterized in that the address of each repeater is an equipment-specific number which distinguishes the repeater from other repeaters of the same series or of the same design like a serial number and is unalterably stored in a memory (3) of the repeater.

7. A locating unit for a digital two-way communication system comprising repeaters each of which has an unalterable address and a changeover device for loop closure which is controllable from the locating unit, characterized in that the locating unit includes devices (6, 7, 8, 9, 10, 11) for successively interrogating the repeaters (Fig. 1) for their addresses in accordance with their physical order in the system and for storing said addresses, together with the locations of the repeaters in the system, in a memory (8).

8. A locating unit as claimed in claim 7, characterized in that the devices include a control logic (6), a word generator (7) controlled by the control logic and serving to transmit addresses and instructions in conjunction with the interrogation, a receiver (9) for receiving addresses transmitted by the repeaters, and a measuring device (10) for determining the location of the repeater transmitting an address, the control logic causing the received address of a repeater to be entered into the memory (8) together with the determined location of said repeater, and that the locating unit includes manually operated or automatically or remotely controlled means (12, 13, 14) connected to the control logic (6) for initiating the interrogation and storage processes.

## Revendications

1. Système numérique de transmission d'informations avec deux stations d'extrémité et une pluralité de répéteurs intermédiaires dont chacun présente sa propre adresse et est susceptible d'être commandés à distance grâce à des instructions reçues en combinaison avec cette adresse, caractérisé en ce que dans chaque répéteur intermédiaire, l'adresse propre du répéteur est stockée de façon inaltérable dans une mémoire (3).

2. Système numérique de transmission d'informations selon la revendication 1, caractérisé en ce que l'adresse d'un répéteur intermédiaire est un nombre qui lui est spécifique et qui le distingue, tout comme un numéro de fabrication, d'autres répéteurs intermédiaires de la même série ou du même modèle.

3. Système numérique de transmission d'informations selon la revendication 1 ou 2, le système étant bidirectionnel, dans lequel chaque répéteur intermédiaire comporte un dispositif de basculement susceptible d'être commandé à distance pour le rebouclage à partir d'un appareil de localisation, caractérisé en ce que l'appareil de localisation comprend des dispositifs (6, 7, 8, 9, 10, 11) apte à interroger les répéteurs intermédiaires (fig.1) l'un après l'autre, suivant leur séquence spatiale dans le système pour obtenir leur adresse, et à stocker ces adresses dans une mémoire (8) avec la position des répéteurs intermédiaires dans le système.

4. Système selon la revendication 3 caractérisé en ce que les dispositifs comprennent une logique de commande (6), un générateur de mots (7) commandé par la logique de commande pour l'émission d'adresses et d'instructions en association avec l'interrogation, un récepteur (9) pour la réception des adresses émises par les répéteurs intermédiaires ainsi qu'un dispositif de mesure (10) pour la détermination de la position d'un répéteur intermédiaire qui émet son adresse, la logique de commande se chargeant de l'introduction dans une mémoire (8) de l'adresse reçue d'un répéteur intermédiaire en combinaison avec sa position ainsi déterminé, et en ce que l'appareil de localisation comprend des moyens (12, 13, 14) qui sont reliés à la logique de commande (6) et permettent le lancement des processus d'interrogation et de stockage soit manuellement, soit automatiquement, soit de façon commandée à distance.

5. Système selon la revendication 3 ou 4, caractérisé en ce que chacun des répéteurs intermédiaires comporte un émetteur SE pour l'émission de son adresse, et un circuit de reconnaissance d'instructions et de commande (5) apte à fonctionner conjointement avec le dispositif de localisation.

6. Une série de répéteurs intermédiaires pour un système numérique de transmission d'information avec deux stations d'extrémité et une pluralité de répéteurs intermédiaires dont chacun présente sa propre adresse et est susceptible d'être commandés à distance grâce à des instructions reçues en combinaison avec ladite adresse caractérisé en ce que l'adresse de chaque répéteur intermédiaire est un nombre qui est spécifique à ce répéteur, qui le distingue, tout comme un numéro de fabrication des autres répéteurs intermédiaires de la même série ou du même modèle et qui est stocké de façon inaltérable dans une mémoire (3) du répéteur intermédiaire.

7. Appareil de localisation pour un système numérique bidirectionnel de transmission d'information comportant des répéteurs intermédiaires, dont chacun comporte une adresse inaltérable ainsi qu'un circuit de basculement pour le rebouclage susceptible d'être commandé à partir de l'appareil de localisation, caractérisé en ce que l'appareil de localisation comprend des dispositifs (6, 7, 8, 9, 10, 11) susceptible d'interroger les répéteurs intermédiaires (fig.1) l'un après l'autre, suivant leur séquence spatiale dans le système pour obtenir leur adresse, et de stocker lesdites adresses dans une mémoire (8) avec la position des répéteurs intermédiaires dans le système.

8. Appareil de localisation selon la revendication (7), caractérisé en ce que les dispositifs comprennent une logique de commande (6), un générateur de mots (7) commandé par la logique de commande pour l'émission d'adresses et d'instructions en association avec l'interrogation, un récepteur (9) pour la réception des adresses émises par les répéteurs intermédiaires ainsi qu'un dispositif de mesure (10) pour la détermination de la position d'un répéteur intermédiaire qui émet son adresse, la logique de commande se chargeant de l'introduction dans une mémoire (8) de l'adresse reçue d'un répéteur intermédiaire en combinaison avec sa position ainsi déterminée, et en ce que l'appareil de localisation comprend des moyens (12, 13, 14) qui sont reliés à la logique de commande (6) permettant le lancement des processus d'interrogation et de stockage soit manuellement, soit automatiquement, soit de façon télécommandée.
